(19) **Europäisches Patentamt European Patent Office Office européen des brevets**

(11) **EP 2 894 505 B1**

(12) **EUROPEAN PATENT SPECIFICATION**

(45) Date of publication and mention
of the grant of the patent:
**06.05.2020 Bulletin 2020/19**

(21) Application number: **14188079.9**

(22) Date of filing: **08.10.2014**

(51) Int Cl.:
$G06T\ 7/11$ (2017.01)  $G06T\ 7/136$ (2017.01)
$G06T\ 7/48$ (2017.01)  $G02B\ 21/00$ (2006.01)
$G02B\ 21/36$ (2006.01)  $G06K\ 9/00$ (2006.01)
$G01V\ 99/00$ (2009.01)

(54) **The method for determining the morphology of cokes and chars**

**Methode zur Bestimmung der Morphologie von Kohle und kohlenstoffhaltigen Materials**

**Procédé de détermination de la morphologie de cokes et de produits de carbonisation**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2015 Bulletin 2015/29**

(73) Proprietor: **Instytut Chemicznej Przeróbki Wegla
41-803 Zabrze (PL)**

(72) Inventors:
• **Wojtaszek, Malgorzata
41-608 Swietochlowice (PL)**
• **Mianowski, Andrzej
44-100 Gliwice (PL)**
• **Sobolewski, Aleksander
41-800 Zabrze (PL)**

• **Sciazko, Marek
40-558 Katowice (PL)**

(74) Representative: **Korga, Leokadia
Kancelaria Rzecznika Patentowego
ul. Bereniki 6/7
44-117 Gliwice (PL)**

(56) References cited:
**WO-A1-03/095986    WO-A2-2012/118867
JP-A- 2000 266 613    US-A- 5 687 251
US-A1- 2002 186 875**

• **H. Marsh ET AL: "Structure and formation of shot
coke ? a microscopy study", Journal of Materials
Science, vol. 20, no. 1, 1 January 1985
(1985-01-01), pages 289-302, XP055649829,
Dordrecht ISSN: 0022-2461, DOI:
10.1007/BF00555923**

## Description

The subject of the invention is the manner of determining, by testing and assessing, the morphology of blast-furnace and cupola cokes, as well as chars. Blast-furnace or cupola coke is classified as high-quality coke, and its properties are described by a number of properties in terms of physical properties, including mechanical and chemical properties, taking into account the mineral substance included in it, described as ash. There usually exists a detailed description of the property parameter sets which is strictly followed in commercial relations. On the other hand, the necessity to compose coal blends earmarked for coking in modern systems of top-charging and stamped charged ovens with many coal components, often of unknown properties, developed the analytical research into its morphology, often together with the basic properties of the initial coal blend of variable density in both systems with potential additives.

As for the terms of structure and texture of coke there should be assumed the model division that it is a 3D spatial image reduced to porous and optical 2D texture. Porous texture is determined based on a 2D image, i.e. observed in the cross-section of the porosity and mass allocation in volume, through fractal dimension. Such a view suggests that it is a description of the structure of coke reduced to a 2D image. The fractal dimension calculated for a two-dimensional image is within the limits of the values 1-2. A more uniform, beneficial mass distribution results in the fractal dimension closer to 2. A chaotic mass distribution on a microsection of a coke sample, i.e. local large pores, canals or fissures cause a decrease in the value of the fractal dimension.

It is more complicated to determine the elements constituting the image of the anisotropic and isotropic texture. Based on standard ASTM D5061-07 entitled "Microscopic determination of the textural components of metallurgical coke" there are distinguished 11 types of textures within the binder phase, i.e. without taking into account the filles phase elements, starting from isotropic ones, and then after noticeable, incipient anisotropy to large band anisotropy, sometimes referred to as ribbon.

From the PL 174066 patent description there is known the manner of determining the fibrosity index of electrode cokes, consisting in analyzing microscopic microsections, conducted with the use of a computer, characterized by the fact that the subsequent digital images of a fragment of a microsection are divided into several subimages, and then for every subimage there is measured, with the use of a computer, the edge direction in a point, and those activities are conducted for all the subimage points. A circular histogram of subimage edges is prepared, after which its degree of elongation is calculated, then all the activities are repeated for a larger number of images. The fibrosity index of the texture is averaged as a final result.

In the article by Mariusz Minkina and Andrzej Mianowski Possibilities of computer recognition of coke texture anisotropy, presented at the II Scientific and Technical Conference "The Measurements of Fuel Parameters", Warsaw 2005, there were presented new possibilities of applying the computer method of image analysis to recognition of the degree of anisotropy of the textures appearing in cokes from hard coals. There was suggested the manner of classifying various types of textures based on the value of the anisotropy index and the average values of the image greyness degree gradient. The analysis was conducted for a group of perfect textures from hard coal vitrinites, with the use of the circular histogram algorithm.

The manner in the invention solves the problem of assessing and testing the morphology of cokes and carbonating agents, and is characterized by computer recognition of the image of its structure and texture.

The manner of specifying the morphology of cokes and chars, consisting in analyzing the microscopic microsections of coke from one microscopic view, is characterized in the invention in that under magnification, in reflected light, the image with strengthened anisotropic effect by a retardation plate or interference-differential contrast, is analyzed in the polarized light with cropping the image, to get the view of a predetermined size, showing the separated optical texture classified according to the ASTM D5061-07.

Preferably, from the image of strengthened anisotropic effect, with the use of the methodology of determining the fibrosity index of the texture, the grey color gradient vectors are determined the grey color gradient vectors within the isolated texture, and after calculating the respective indices of fibrosity, the average index,-is calculated in the form of one dimensionless value basing on the linear additivity law, taking into account the weight in the form of the volumetric shares, determined through prior quantitative analysis of textures, performed according to the ASTM D5061-07.

The proposed solution is characterized by a high degree of correlation with the technological quality parameters of coke, such as reactivity and post-reaction strength, designated through the tests of Nippon Steel Corporation. It is also the method of simplification of the description of coke texture quality description in comparison with manual methods, with the simultaneous minimization of the subjectivity of the assessment of coke texture. The manner described in this project is an introduction to the automation of the process of characterizing coke structure, necessary for the qualitative assessment of coke and for projection methods.

The photographs [Photo 1 - Photo 2] present the properly obtained test results, including:

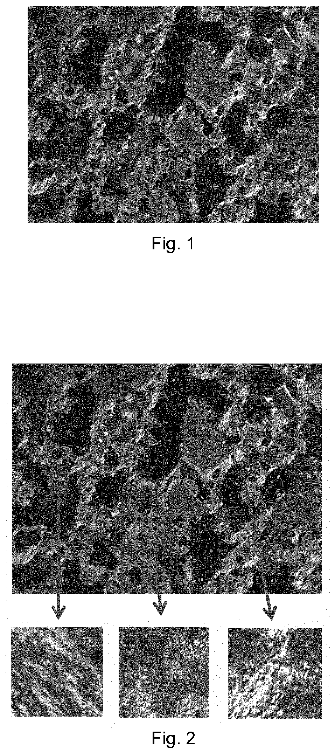

Fig. 1 Photo. 1 Image of the coke with strengthened anisotropic effect.
Fig. 2 Photo. 2 Process of division into subimages constituting the samples of textures of the resolidified phase.

Fig. 3 Table 1. Volumes of respective optical textures in coke

In the invention application example, there were used example colorful photos.

Example application of the invention

**Step 1.**

A fragmentary microsection of a sample of a blast-furnace coke was prepared, with the technological parameters of CRI=34.9% and CSR=49.3%, by embedding it, at decreased pressure (beneficially - 20 kPa) in epoxy resin, and then by grinding and polishing it with automatic methods with the use of polishing suspensions. It is also possible to apply acrylic resin with low ability of structure penetration, and then to grind and polish with automatic methods with the use of polishing suspensions.

**Step 2.**

The photographs with strengthened anisotropic effect were taken - Photo 1. The anisotropic effect was strengthened by taking the photograph in polarized light, with the use of a λ retardation plate. Polarized light reveals the anisotropic character of the material, i.e. its chemical property. The λ plate emphasizes the difference in the optical character of the respective types of anisotropic textures, thus intensifying the anisotropic effect. The same effect of intensifying the anisotropic effect may be obtained by applying interference-differential contrast, DIC.

**Step 3.**

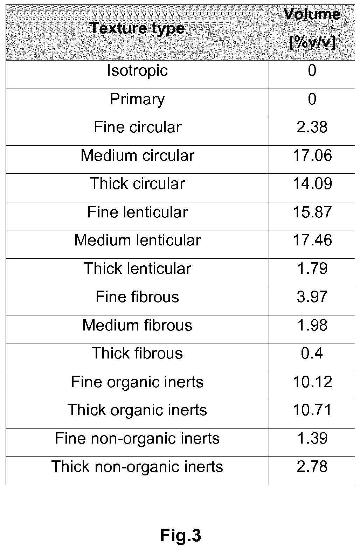

There was conducted the quantitative analysis of the types of coke textures as per the ASTM D5061-07 standard. The results for the tested coke sample are as shown in figure 3.

**Step 4.**

A series of photographs were taken with the intensified anisotropic effect in reflected polarized light (Photo 1), with the use of the λ retardation plate, in permanent, determined lighting conditions with magnification x500 with oil immersion, covering single isolated types of textures, consistent with ASTM D5061-07 (Photo 2). The images constituting texture samples may not contain a mixture of types of textures, or motives that are pores. It was necessary to maintain scaling individually for each image. The collection of image samples produced for the tested sample contained at least 5 images for each calculated type of texture (does not apply to inert organic and non-organic elements). We do not use compressed images, only formats without compression or with loss-free compression (PNG, TIFF, BMP).

**Step 5.**

For each image sample produced (Photo 2) there was conducted the measurement of the grey color gradient vector on the basis of the automatic digital edge detection. Colorful images should be automatically converted into a scale of greyness. Each image was divided into the segments using the mesh of a predetermined size, called image gradient points. With those segments, the direction and value of grey color gradients were measured. All the vectors measured within the tested gradient points, one vector per each point were collected and presented in form of a histogram in a polar set of coordinates, i.e. the middle of the histogram lies at the beginning of the coordinate system. In order to determine the shape (elongation) of the histogram, there was used the method of approximation of the histogram outline in an ellipse. The semi-axes of the ellipse circumscribed on the histogram were calculated, where a > b, and the $W_i$ fibrosity indices were calculated based on the formula:

$$W_i = (a\text{-}b) \, / \, a$$

**Step 6.**

On the basis of the results of the quantitative analysis as per ASTM D5061-07 (Table 1) and the results of the analysis of the grey color gradient vectors, there was calculated the total fibrosity index of the texture, based on the formula:

$$W_x = \sum x_i W_i$$

taking into account the weights in the form of volumetric shares $x_i$ in the $W_i$ index shares where:

$$\sum x_i \equiv 1$$

For the tested sample:
$W_x = 0.37$

**Claims**

1. A method of determining the morphology of cokes and chars_by analyzing the microscopic cross-sections of a sample from one microscopic view of polished blocks embedded in the polymeric resin according to the well-known methods, wherein the method comprises the steps of:

    a) taking one magnified photomicrograph by using a microscope with in a reflected, polarized light using λ retardation plate or the differential interference contrast,

b) cropping the image to generate the view consisting the individual optical texture identified according to the ASTM D5061-07, called sample image,

c) dividing the sample images into segments, using a mesh of a predetermined size to obtain the gradient measurement points

d) measuring the direction and value of a grey colour gradient vectors for every gradient measurement point, using the edges detection digital method, to create the gradient histogram, putting all of the vectors from one sample image together, according to the rule that the middle of each vector is placed at the beginning point of the coordinate system,

e) calculating the ellipse with a and b axes, where a>b, using the shape of the histogram as a base to define the shape of ellipse,

f) calculating the fibrosity index $W_i$ as $W_i = (a-b)/a$

g) calculating the mean value of the fibrosity index as a dimensionless value within the whole sample using the additivity law, where the textures content measured according to the ASTM D5061-07 classification, is a weight in the equation, $W_x = \sum x_i \times W_i$, where $x_i$ is the volume content of the optical texture type and $W_i$ is the fibrosity index of an individual texture type,

h) however the texture classified as filler phase texture, according to the classification from ASTM D5061-07 should use fibrosity index $W_i$ the same as calculated for isotropic texture, in calculation of $W_x$.

2. The method as per claim 1 **characterized in that** the measurement is carried out in magnification x500.


**Patentansprüche**

1. Die Methode zur Bezeichnung der Morphologie von Kohle und kohlenstoffhaltigem Material, die auf Analyse der Mikroskop-Querschnitte aus einer Mikroskop-Fassung der polierten im Polymerharz laut allgemein bekannten Methoden gesenkten Probe beruht. Die Methode besteht aus folgenden Etappen:

a) Ausführung in Vergrößerung einer Mikrofotografie bei Nutzung des Mikroskops mit reflektiertem, polarisiertem Licht bei Nutzung der Verzögerungsplatte λ oder des differenzierten Interferenzkontrasts.

b) Annahme des Bildes zur Generierung der Sicht, die aus der einzelnen optischen laut Norm ASTM D5061-07 bestimmten Textur besteht und als Bildprobe genannt ist.

c) Teilung der Bildproben in Segmente bei Nutzung des Netzes von bestimmter Maschengröße, um Messpunkte für Gradienten zu erreichen.

d) Messung der Richtung und Werte von Vektoren der grauen Farbe für jeden Messpunkt für Gradienten bei Nutzung der Digitalmethode von Ermittlung der Ränder, um das Histogramm des Gradienten zu erstellen, das miteinander alle Vektoren aus einer Bildprobe verbindet, laut der Regel, dass die Mitte jedes Vektors im Anfangspunkt des Vergleichssystems untergebracht ist.

e) Festsetzung der Ellipse von Achsen a und b, wo a>b, wobei die Gestalt des Histogramms als die Grundlage zur Bestimmung der Gestalt von Ellipse genutzt ist.

f) Berechnung vom Faserindex $W_i$ als $W_i = (a-b)/a$

g) Berechnung des Mittelwertes vom Faserindex als den dimensionslosen Wert für die ganze Probe mit Nutzung des Additivitätsrechts, wo der Inhalt der Texturen, die laut ASTM D5061-07-Klassifizierung bestimmt wurde, ist das Gewicht in Gleichung $W_x = \sum x_i \times W_i$, wo $x_i$ das Volumengehalt des Typs von Optik-Textur ist, und $W_i$ Faserindex des individuellen Texturtyps ist.

h) Jedoch die Textur, die als Textur von Volumenphase klassifiziert ist, soll laut ASTM D5061-07-Klassifizierung in Berechnungen $W_x$ denselben Faserindex $W_i$ wie für Isotoptextur nutzen.

2. Methode, die mit der Patentanspruch 1 übereinstimmend ist, charakterisiert sich damit, dass die Messung in Vergrößerung x500 durchgeführt wird.


**Revendications**

1. Le procédé de détermination de la morphologie de cokes et de produits de carbonisation par analyse de sections microscopiques à partir d'une seule prise microscopique d'un échantillon poli immergé dans une résine polymère, selon des procédés communément connus, comprenant les étapes suivantes

(a) prendre une seule micro photographie à l'aide d'un microscope à lumière réfléchie et polarisée, en utilisant une plaque retardatrice λ ou un contraste d'interférence différentiel,

(b) le recadrage d'une image pour générer une vue constituée d'une seule texture optique déterminée conformément à la norme ASTM D5061-07, appelée échantillon d'image,

(c) la division des échantillons d'images en segments, en utilisant une grille d'une taille de maille spécifiée, pour obtenir des points de mesure de gradient,

(d) mesure de la direction et de la valeur des vecteurs de gradient de gris pour chaque point de mesure du gradient, en utilisant un procédé de détection numérique des contours, afin de créer un histogramme de gradient combinant tous les vecteurs d'un seul échantillon d'image, sur la base du fait que le centre de chaque vecteur est placé au point de départ du système de coordonnées,

(e) traçage de l'ellipse avec les axes a et b, où a>b, en utilisant la forme de l'histogramme comme base pour déterminer la forme de l'ellipse,

(f) calcul de l'indice de fibre $W_i$ comme $W_i = (a-b)/a$

(g) calcul de la valeur moyenne de l'indice de fibre comme valeur sans dimension pour l'ensemble de l'échantillon en utilisant la loi d'addition, où la teneur en texture déterminée selon la classification ASTM D5061-07 est le poids dans l'équation $W_x = \sum x_i \times W_i$, où $x_i$ est la teneur en volume du type de texture optique et $W_i$ est l'indice de fibre du type de texture individuel,

(h) toutefois, la texture classée comme texture en phase - charge selon la classification ASTM D5061-07 doit utiliser dans le calcul de $W_x$ le même indice de fibre $W_i$ que celui déterminé pour la texture isotrope.

2. Le procédé selon la revendication 1 est **caractérisée par** un grossissement de x500.

Fig. 1

Fig. 2

| Texture type | Volume [%v/v] |
|---|---|
| Isotropic | 0 |
| Primary | 0 |
| Fine circular | 2.38 |
| Medium circular | 17.06 |
| Thick circular | 14.09 |
| Fine lenticular | 15.87 |
| Medium lenticular | 17.46 |
| Thick lenticular | 1.79 |
| Fine fibrous | 3.97 |
| Medium fibrous | 1.98 |
| Thick fibrous | 0.4 |
| Fine organic inerts | 10.12 |
| Thick organic inerts | 10.71 |
| Fine non-organic inerts | 1.39 |
| Thick non-organic inerts | 2.78 |

**Fig.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• PL 174066

**Non-patent literature cited in the description**

• **MARIUSZ MINKINA ; ANDRZEJ MIANOWSKI.** Possibilities of computer recognition of coke texture anisotropy. *II Scientific and Technical Conference ''The Measurements of Fuel Parameters,* 2005